Europäisches Patentamt

European Patent Office

Office européen des brevets

(19)

(11) Numéro de publication : **0 021 867**
**B1**

(12) **FASCICULE DE BREVET EUROPÉEN**

(45) Date de publication du fascicule du brevet :
05.01.83

(51) Int. Cl.³ : **H 02 M   3/155**, H 02 M   3/335

(21) Numéro de dépôt : **80400589.0**

(22) Date de dépôt : **29.04.80**

(54) **Dispositif d'alimentation à découpage régulé contre les variations de tension d'entrée et de puissance de sortie, notamment pour récepteur de télévision.**

(30) Priorité : **13.06.79 FR 7915140**

(43) Date de publication de la demande :
**07.01.81 Bulletin 81/01**

(45) Mention de la délivrance du brevet :
**05.01.83 Bulletin 83/01**

(84) Etats contractants désignés :
**CH DE GB IT LI SE**

(56) Documents cités :
**DE A 2 336 110**
**DE A 2 613 896**

(73) Titulaire : **THOMSON-BRANDT**
**173, Boulevard Haussmann**
**F-75360 Paris Cedex 08 (FR)**

(72) Inventeur : **Lauret, Philippe**
**"THOMSON-BRANDT" SCPI 173, Bld. Haussmann**
**F-75360 Paris Cedex 08 (FR)**
Inventeur : **Rilly, Gérard**
**"THOMSON-BRANDT" SCPI 173, Bld. Haussmann**
**F-75360 Paris Cedex 08 (FR)**

(74) Mandataire : **Schmolka, Robert et al**
**THOMSON-CSF SCPI 173, Bld Haussmann**
**F-75379 Paris Cedex 08 (FR)**

## Dispositif d'alimentation à découpage régulé contre les variations de tension d'entrée et de puissance de sortie, notamment pour récepteur de télévision

La présente invention se rapporte aux dispositifs d'alimentation à découpage régulés contre les variations de tension d'entrée et de puissance de sortie et qui permettent d'obtenir par hachage d'une tension continue d'entrée une tension de sortie régulée en amplitude en dépit des variations séparées ou conjointes de cette tension d'entrée et de la puissance de sortie. La technique du découpage permet de limiter les pertes à un strict minimum. On économise ainsi une énergie importante, ce qui est précieux dans des applications telles que, par exemple, l'alimentation des téléviseurs.

De telles alimentations sont connues et ont été décrites notamment dans les publications antérieures DE-A-26 13 896 (voir préambule de la revendication 1), DE-A-23 36 110 ou FR-A-2 345 762.

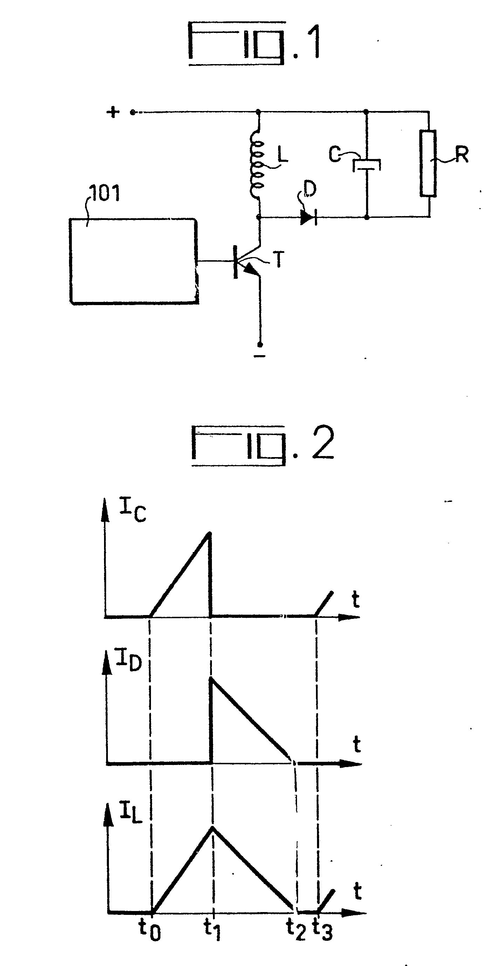

On a représenté sur la figure 1, le schéma très simplifié d'une telle alimentation. Entre les bornes + et − d'une source de tension continue, sont mises en série une inductance L et un transistor hacheur T. Un générateur de commande 101 connecté à la base du transistor T permet de bloquer ou de saturer celui-ci de manière cyclique. Lorsque le transistor T est saturé, le point commun à l'inductance L et au collecteur du transistor T est porté au potentiel négatif de la source d'alimentation et le courant traverse cette inductance L depuis le pôle + jusqu'au pôle −. Lorsque le transistor se bloque, la tension aux bornes de l'inductance L s'inverse et une diode D reliée par son anode au point commun entre l'inductance L et le transistor T permet de redresser la tension qui apparaît alors aux bornes de l'inductance. Cette tension redressée sert à charger un condensateur de filtrage C connecté entre la cathode de la diode D et l'autre borne de l'inductance L. La tension ainsi redressée, présente aux bornes du condensateur C, permet d'alimenter une charge symbolisée sur la figure 1, par une résistance R. Le générateur de commande 101 permet de commander la base du transistor T de telle manière que la tension aux bornes du condensateur C soit constante en dépit des variations de la tension d'alimentation et des variations de la résistance R.

On sait actuellement réaliser une telle alimentation pour la faire fonctionner de deux manières différentes :

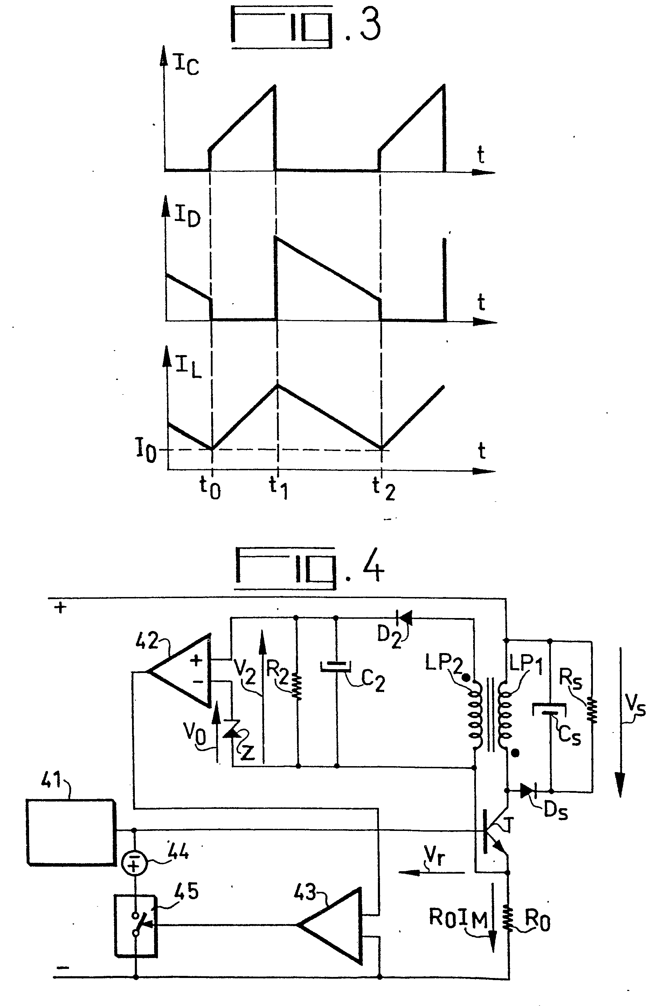

Pour un premier mode de fonctionnement, dit à décharge complète de l'inductance, on a représenté sur la figure 2 le courant $I_c$ dans le collecteur du transistor, le courant $I_D$ dans la diode D, et le courant $I_L$ dans l'inductance L pendant une période complète de commande du transistor T par le générateur 101.

A l'instant $t_0$ on sature le transistor T qui était préalablement bloqué. Le courant $I_L$ dans l'inductance se met alors à croître linéairement en partant d'une valeur nulle et par conséquent le courant $I_c$ dans le collecteur du transistor fait de même. La diode D est alors bloquée.

A l'instant $t_1$ on bloque le transistor, et par conséquent la tension aux bornes de l'inductance s'inverse. La diode D entre alors en conduction et le courant dans l'inductance décroît de manière linéaire jusqu'à s'annuler à un instant $t_2$. Le courant qui traverse cette inductance est égal alors à celui qui traverse la diode D.

A l'instant $t_2$ le courant dans l'inductance et dans la diode D s'annule, et cette dernière se bloque. Le système reste alors en repos avec un courant dans l'inductance nul jusqu'à l'instant $t_3$ correspondant à la période ultérieure où le transistor est de nouveau saturé.

Dans ce mode de fonctionnement toute l'énergie stockée dans l'inductance entre les instants $t_0$ et $t_1$ est transférée au circuit de sortie RC entre les instants $t_1$ et $t_2$ ce qui justifie l'appelation de mode à décharge complète de l'inductance.

Pour une puissance de sortie déterminée et une tension minimale de la source de courant continue, la valeur de l'inductance ne peut être supérieure à une valeur maximale pour que la décharge soit complète.

La régulation vis-à-vis du secteur et de la puissance demandée en sortie est assurée par une variation du temps de conduction du transistor entre $t_0$ et $t_1$.

Dans un deuxième mode de fonctionnement d'une telle alimentation, dit à décharge incomplète de l'inductance, on remet en conduction le transistor T avant que l'énergie stockée dans l'inductance soit complètement transférée dans le circuit d'utilisation. Les courants dans les éléments du dispositif sont représentés sur la figure 3 de manière corrélative à la figure 2.

On remarque sur cette figure 3 qu'à l'instant de la remise en conduction, c'est-à-dire à l'instant $t_2$, le courant $I_0$ dans l'inductance n'est plus nul et donc que les instants $t_2$ et $t_3$ sont confondus.

Dans ce mode de fonctionnement, la régulation vis-à-vis des variations de tensions de la source continue dont on part est essentiellement assurée par la variation de temps de conduction du transistor entre les instants $t_0$ et $t_1$.

La régulation par rapport à la puissance absorbée dans la charge R est elle assurée uniquement par une variation du courant résiduel $I_0$.

Pour une puissance de sortie déterminée, et pour une tension de la source continue maximale, la valeur de l'inductance L doit être supérieure à une valeur minimale pour que sa décharge reste incomplète. Les circuits des générateurs de commande actuellement utilisés dans les alimentations connues ne permettent pas de passer du mode de fonctionnement en décharge complète au mode de fonctionnement en décharge incomplète selon les variations de tension de la source continue et les variations de puissance absorbée dans la charge. En effet, quand on cherche à décrire une large plage de tension et de puissance, l'alimentation tend spontanément à passer du mode en décharge complète au mode en décharge incomplète, mais elle présente à ce moment des irrégularités de fonctionnement qui nuisent gravement à la stabilité de la tension régulée fournie et à la fiabilité du dispositif en raison de l'augmentation des pertes qui se traduit par un échauffement excessif.

L'objet de l'invention est un dispositif d'alimentation à découpage régulé contre les variations de tension d'entrée et de puissance de sortie, du type comprenant une source de tension continue alimentant en série un primaire de transformateur, un transistor hacheur et une résistance de mesure, un circuit de commande permettant d'appliquer sur la base du transistor hacheur des impulsions récurrentes de déblocage, un premier secondaire de transformateur permettant de délivrer une première tension destinée à mesurer la valeur de la tension de sortie de l'alimentation, des moyens permettant de délivrer une deuxième tension de valeur déterminée, des moyens permettant de comparer la première et la deuxième tension et de délivrer en fonction de cette comparaison une tension de référence, des moyens permettant de déterminer la différence entre cette tension de référence et une tension de mesure apparaissant aux bornes de la résistance de mesure pendant le déblocage du transistor et de délivrer un signal de blocage pour une valeur déterminée de cette différence, et un interrupteur permettant sous l'action de ce signal de blocage de court-circuiter la base du transistor hacheur pour le rebloquer, caractérisé en ce qu'il comprend en outre des moyens permettant de mesurer la durée de conduction du transistor hacheur et de modifier la tension de référence en fonction de cette mesure pour maintenir constante cette durée d'un cycle à l'autre pour chaque couple de valeurs déterminées de la tension d'entrée et de la puissance de sortie, le dispositif pouvant ainsi passer du mode de fonctionnement à décharge complète du transformateur au mode de fonctionnement à décharge incomplète de celui-ci en conservant une fréquence fixe de fonctionnement.

D'autres particularités et avantages de l'invention apparaîtront clairement dans la description suivante, présentée à titre d'exemple non limitatif et faite en regard des figures annexées suivantes :

la figure 1, qui représente un schéma de principe d'une alimentation à découpage connue ;

les figures 2 et 3, qui représentent des disgrammes des courants dans deux modes de fonctionnement distincts de l'alimentation représentée en figure 1 ;

la figure 4, qui représente un schéma plus détaillé d'une alimentation à découpage connue ;

les figures 5 et 6, qui représentent des diagrammes de tensions et de courants dans l'alimentation de la figure 4 ;

la figure 7, qui représente le schéma de la figure 4, modifié selon l'invention ;

les figures 8 et 9, qui représentent des diagrammes de tensions et de courants dans l'alimentation de la figure 7 ;

les figures 10 et 11, qui représentent deux modes de réalisation d'une alimentation à découpage selon l'invention ;

la figure 12, qui représente le mode de réalisation de l'organe 46 des figures 11 et 10 ; et

la figure 13, qui représente des diagrammes du courant $I_L$ dans divers modes de fonctionnement d'une alimentation selon l'invention.

Le schéma simplifié de la figure 1 ne donne pas de détails sur les organes de régulation.

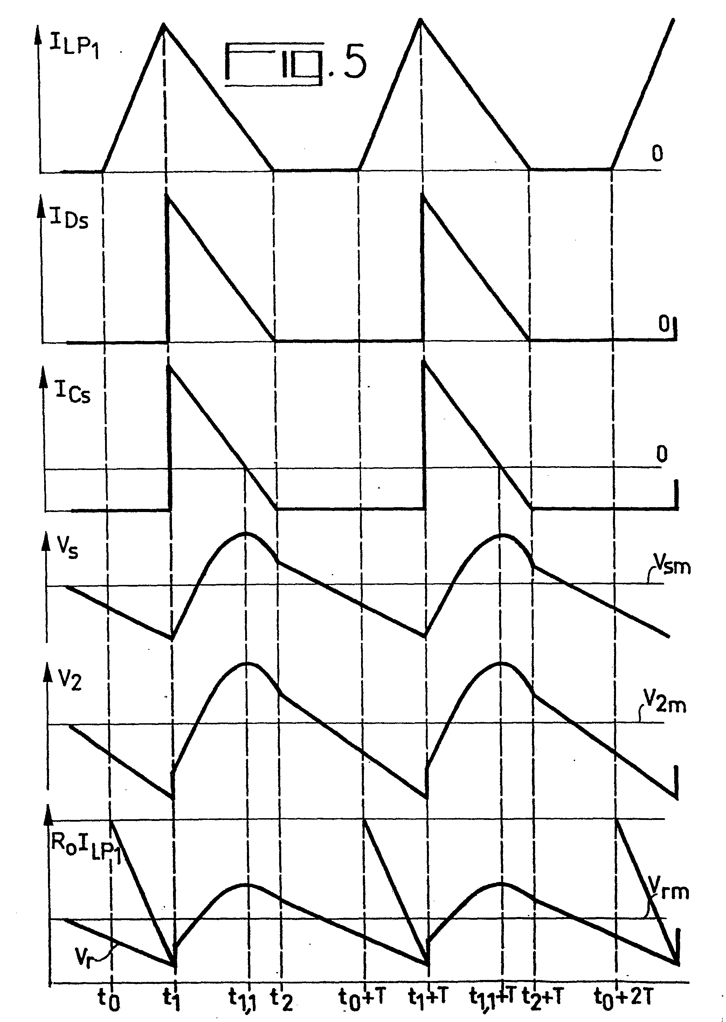

Dans le schéma plus détaillé de la figure 4, on retrouve en série entre les bornes + et − d'une source de tension continue un enroulement $LP_1$ mis en série avec un transistor T. Un circuit de commande 41 connecté à la base du transistor T assure les fonctions suivantes :

— il fixe la fréquence de fonctionnement du dispositif d'alimentation ;

— il assure au début de chaque période la mise en saturation du transistor T ;

— il maintient ce transistor saturé pendant tout le temps où un interrupteur 45 connecté entre la base du transistor T et le pôle négatif de l'alimentation reste ouvert ;

— il cesse d'alimenter la base de T lorsque l'interrupteur 45 se ferme.

Une source de tension 44 est connectée en série entre l'interrupteur 45 et la base de T avec son pôle négatif relié à cette base ; elle permet d'assurer un blocage franc du transistor T lorsque l'interrupteur 45 se ferme et que le dispositif de commande 41 cesse d'alimenter la base.

Une résistance $R_0$ de valeur faible est connectée en série entre l'émetteur du transistor T et le pôle négatif de la source d'alimentation. Elle permet de mesurer le courant qui traverse l'enroulement $LP_1$ et le transistor T en délivrant à ses bornes une tension dont la valeur est égale au produit de $R_0$ par ce courant.

Un comparateur de tension 43 dont l'une des entrées est reliée au pôle négatif de la source de tension continue, et l'autre entrée à l'émetteur du transistor T par l'intermédiaire d'un circuit qui sera décrit plus loin et qui délivre une tension de référence $V_r$, permet de comparer la tension développée aux bornes de la résistance $R_0$ à cette tension de référence $V_r$.

Lorsque le courant qui traverse le bobinage $LP_1$ atteint une valeur $I_M$ maximum fonction de $V_r$, la tension aux bornes de $R_0$ atteint une valeur $R_0I_M$ ; le comparateur 43 bascule alors et commande la fermeture de l'interrupteur 45.

Dans une réalisation courante, on réalise le comparateur 43 de manière à ce que ce basculement se produise lorsque la tension $R_0I_M$ est égale à la tension $V_r$. Dans ce cas, la valeur de $I_M$ est donnée par la relation :

$$I_M = \frac{V_r}{R_0}.$$

Lorsque l'interrupteur 45 se ferme, le transistor T se bloque et l'énergie stockée dans l'enrou-

lement $LP_1$ est transférée par une diode $D_s$ à un circuit de sortie comprenant un condensateur $C_s$ et une résistance de charge $R_s$.

La régulation se fait en contrôlant l'instant de fonctionnement de l'interrupteur 45 par l'intermédiaire de la valeur de la tension de référence $V_r$ et de la tension développée aux bornes de $R_0$.

Pour cela, l'enroulement $LP_1$ n'est pas une inductance simple mais constitue le primaire d'un transformateur comportant un deuxième enroulement $LP_2$. Celui-ci est bobiné dans un sens tel que, l'une de ses extrémités étant reliée à l'émetteur du transistor T, l'autre extrémité alimente une diode $D_2$ qui est conductrice en même temps que la diode $D_s$. Cette diode $D_2$ charge un condensateur $C_2$ relié à l'émetteur du transistor T et comportant en parallèle une résistance de charge $R_2$. Ce circuit $R_2C_2$ est tel que l'énergie qui y est dissipée est négligeable devant celle dissipée dans le circuit de sortie $R_sC_s$.

La tension $V_2$ développée aux bornes de la résistance $R_2$ pendant la conduction de la diode $D_2$ est ainsi proportionnelle à la tension de sortie $V_s$ et l'on a :

$$V_2 = K_1 V_s.$$

Un amplificateur différentiel 42 dont l'une des entrées est reliée à la cathode de la diode $D_2$ et l'autre entrée à l'émetteur du transistor T par l'intermédiaire d'une diode Zener Z, permet de comparer cette tension $V_2$ à une tension fixe $V_0$ fournie par la diode Zener Z. Cet amplificateur différentiel délivre sur sa sortie la tension de référence $V_r$, laquelle est alors une fonction de $V_0$ et de $V_2$.

En prenant pour origine des potentiels l'émetteur du transistor T, la tension à l'autre extrémité de la résistance $R_0$ décroît lorsque le courant croît dans cette résistance.

Pour que le comparateur 43 bascule dans les conditions définies plus haut, la tension $V_r$ doit être négative, et pour que la régulation agisse effectivement il faut avoir :

$$V_r = V_1 + K_2 (V_2 - V_0).$$

Dans cette expression $V_1$ est négatif et fonction uniquement de $V_0$ et $K_2$ positifs.

En regardant uniquement les valeurs moyennes de ces tensions lorsque $V_2 = V_0$, $V_s$ prend une valeur $V_{s1}$ pour laquelle :

$$V_{s1} = \frac{V_0}{K_1}.$$

Lorsque $V_s$ tend à augmenter, on voit apparaître une tension d'erreur $V_2 - V_0$ qui est amplifiée par l'amplificateur 42 ce qui fait diminuer en valeur absolue la tension $V_r$.

Sous l'effet de cette diminution, le temps de conduction $t_1$ se raccourcit ce qui diminue $I_M$ et tend à ramener $V_s$ à sa valeur initiale $V_{s1}$. Un mécanisme de régulation analogue se produit lorsque $V_s$ tend à diminuer.

La valeur moyenne de $V_s$ sera donc sensiblement égale à celle de $V_{s1}$ avec une tension d'erreur $V_s - V_{s1}$ d'autant plus faible que $K_2$ est plus grand.

Cette analyse ne rend compte que de la stabilité à long terme de la tension de sortie et ne permet pas de prendre en compte les fluctuations de celle-ci au niveau de la périodicité du découpage.

Les principaux courants et tensions nécessaires pour étudier cette régulation pendant la durée d'une période sont représentés sur la figure 5.

On remarque notamment que la tension de sortie $V_s$ n'est pas rigoureusement constante mais présente des fluctuations autour de la valeur moyenne $V_{sm}$ pendant la durée d'un cycle de l'alimentation. On peut pendant un tel cycle diviser cette tension $V_s$ en 2 périodes :

— tout d'abord une période de charge, allant de l'instant $t_1$ à l'instant $t_{1,1}$, suivie d'un début de décharge entre les instants $t_{1,1}$ et $t_2$. Cette période de charge et le début de décharge correspond à la conduction de la diode de sortie $D_s$ et au passage d'un courant décroissant $I_{Cs}$ dans le condensateur de sortie $C_s$.

— une deuxième période de décharge entre les instants $t_2$ et $t_1 + t$. Cette période correspond au moment où la diode $D_s$ est bloquée et où le condensateur $C_s$ se décharge dans la résistance de sortie $R_s$. La décharge du condensateur $C_2$ dans la résistance $R_2$ reproduit à un facteur multiplicatif près cette décharge de $C_s$ et le circuit de régulation reçoit ainsi une image de la décharge de $C_s$.

Ainsi le circuit de régulation reçoit une information sur l'évolution de la tension de sortie $V_s$ tout au long d'une période du découpage et le condensateur $C_s$ reçoit l'énergie stockée dans le bobinage $LP_1$ pendant la première partie du cycle de la période et en cède une certaine quantité pendant la deuxième partie de cette période.

Dans cette optique, le mécanisme de régulation est le suivant :

Selon la valeur de l'énergie fournie par le condensateur $C_s$ à la charge $R_s$ durant un cycle, le circuit de régulation modifie l'énergie accumulée dans le bobinage $LP_1$ pendant le cycle suivant en modifiant l'instant d'ouverture du transistor T afin de compenser la décharge du condensateur $C_s$ et de maintenir la valeur moyenne de la tension $V_s$ constante.

Dans le cas de la figure 5, l'alimentation fonctionne dans un mode de décharge complète du bobinage $LP_1$ à chaque cycle et le circuit de régulation peut ainsi fonctionner correctement. En effet, comme il y a une plage de repos, le système peut modifier le temps de conduction du transistor, et donc la valeur crête du courant dans le bobinage, c'est-à-dire en fait l'énergie stockée, sans que le mode de fonctionnement de ce système change. Ceci se déroule tout aussi bien en fonction des modifications de la tension d'entrée qu'en fonction des modifications de la puissance dissipée en sortie.

Lorsque, par suite du fonctionnement de cette régulation, on en arrive à ce que le temps de repos entre deux périodes successives soit nul, le fonctionnement tel que décrit plus haut change lorsque l'on passe dans le mode de décharge incomplète. En effet, la remise en conduction du transistor s'effectue prématurément avant que le bobinage $LP_1$ soit entièrement déchargé dans le circuit de sortie et de ce fait le fonctionnement devient irrégulier d'un cycle à l'autre.

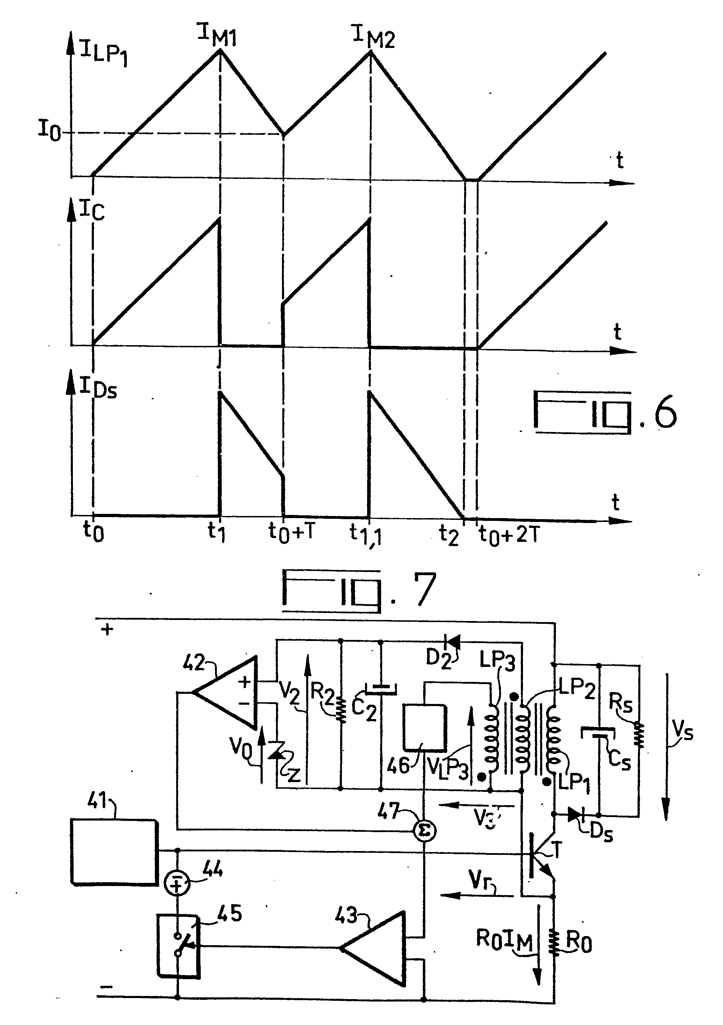

En se référant au diagramme des principaux courants qui est représenté sur la figure 6, à l'instant $t_0$ le transistor T est rendu conducteur par le circuit de commande alors que le courant $I_{LP_1}$ dans le bobinage $LP_1$ est nul. Ce courant croît donc linéairement depuis cette valeur nulle jusqu'à une première valeur $I_{M_1}$ qui est fixée par le circuit de régulation pour maintenir la tension de sortie constante. Cette valeur $I_{M_1}$ est atteinte à l'instant $t_1$. A cet instant $t_1$ le transistor T se bloque sous la commande du circuit de régulation et la diode de sortie $D_s$ se met à conduire. A partir de cet instant, le bobinage $LP_1$ se décharge mais le temps nécessaire pour le décharger complètement est trop long par rapport à l'instant où le transistor est remis en conduction par le circuit de commande. Le transistor T se resature donc à l'instant $t_0 + T$ alors que le courant $I_{LP_1}$ a à ce moment une valeur $I_0$ non nulle. Comme le transistor se sature, la tension aux bornes de la diode $D_s$ change de sens et celle-ci se bloque ; en même temps, le courant $I_{LP_1}$ recommence à croître linéairement, mais à partir d'une valeur de départ non nulle. Le circuit de régulation bloque de nouveau le transistor T à l'instant $t_{1,1}$ pour une valeur du courant dans le bobinage $LP_1$ égale à $I_{M_2}$ ; $I_{M_2}$ étant très peu différente de $I_{M_1}$. Le transistor T se bloque alors de nouveau et la diode $D_s$ se met à conduire. Comme la durée $t_{1,1} - (t_0 + T)$ est plus petite que la durée $t_1 - T_0$, cette fois-ci le bobinage $LP_1$ a le temps de se décharger complètement dans le circuit de sortie avant que le circuit de commande ne remette le transistor T en saturation. Le courant $I_{LP_1}$ revient à une valeur nulle et le système reste au repos pendant un court intervalle de temps entre les moments $t_1$ et $t_0 + 2T$ ce qui lui permet de repartir lors du cycle suivant à partir du même état qu'en $t_0$.

La période de récurrence du système est donc deux fois plus longue que dans le mode de décharge complète. Ceci revient à dire que la fréquence de fonctionnement du système est deux fois plus faible ; de ce fait, le bobinage, qui fonctionne à une fréquence inférieure de moitié à celle pour laquelle il est conçu, présente des pertes bien plus importantes d'où des risques d'échauffement et même de destruction.

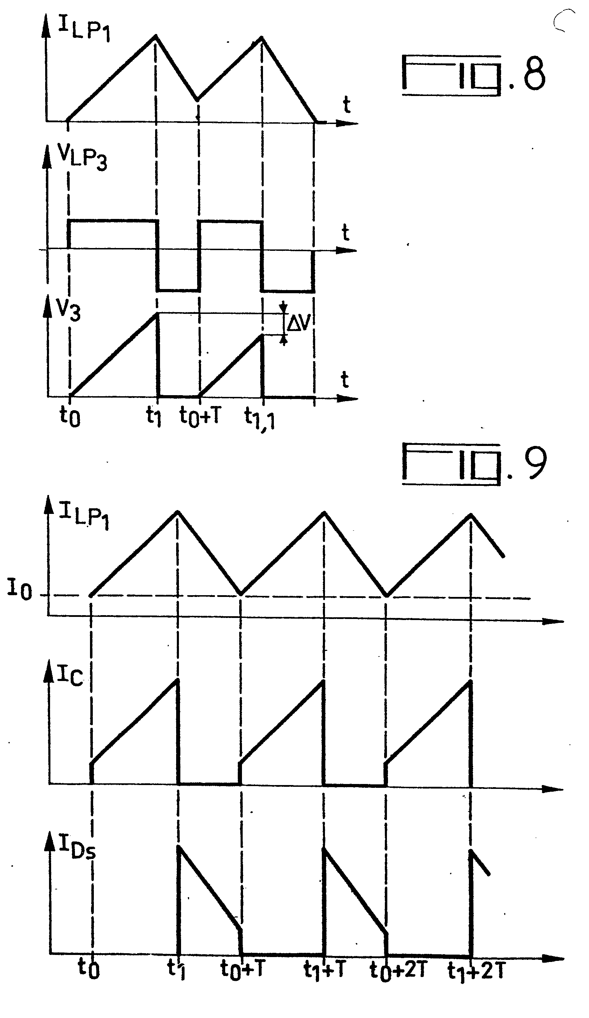

Selon l'invention, pour pouvoir fonctionner en décharge incomplète à la même fréquence qu'en décharge complète, on modifie le schéma de la figure 4 pour obtenir le schéma de la figure 7. Dans le schéma ainsi modifié, un enroulement supplémentaire $LP_3$ est magnétiquement couplé au premier enroulement $LP_1$. Il est réuni par une extrémité à l'émetteur du transistor T et délivre ainsi sur son autre extrémité une tension $V_{LP_3}$

qui représente l'image de la tension aux bornes de $LP_1$. Cette tension aux bornes de $LP_1$ dépend elle-même de la tension collecteur-émetteur du transistor T.

Cette tension $V_{LP_3}$ est représentée sur la figure 8 par rapport au courant dans le transistor T, et on remarque que, comme ce transistor T fonctionne entre les états saturés et bloqués, la tension à ses bornes est rectangulaire. Les flancs des transitions entre les parties négatives et positives de la tension $V_{LP_3}$ permettent ainsi de définir avec précision les temps de conduction et de blocage du transistor.

A partir de cette tension $V_{LP_3}$, un circuit de correction 46 élabore une tension de correction $V_3$ qui peut avoir une forme en dents de scie telle que représentée sur la figure 8, et dont la valeur maximale diminue si le temps de conduction du transistor diminue.

Ainsi dans le cas où l'alimentation passe en mode de décharge incomplète sans correction, on constate que d'une période à la suivante la valeur crête de la tension $V_3$ présente une variation $\Delta V$. Cette variation caractérise la différence de temps de conduction entre ces deux périodes successives.

En ajoutant cette tension $V_3$ dans une proportion définie à la tension de référence $V_r$ décrite plus haut et fournie par le circuit de régulation, on peut ainsi contrôler en permanence le temps de conduction du transistor T. Si ce temps de conduction tend à augmenter, la tension $V_3$ croît ce qui décale ainsi la tension de référence $V_r$, et par un mécanisme de contre-réaction tend à limiter le temps de conduction du transistor et donc le temps de charge du bobinage $LP_1$. De manière inverse, si la durée de conduction du transistor tend à diminuer, $V_3$ diminue et la tension de référence $V_r$ tend à augmenter la durée de conduction du transistor.

Pour cela, on procède à une addition des tensions $V_r$ et $V_3$ dans un circuit 47 qui délivre la tension corrigée résultante au comparateur 43.

Dans ces conditions, lorsque l'on passe du mode à décharge complète dans le mode à décharge incomplète, la fréquence de fonctionnement ne varie pas et le courant de repos $I_0$ dans le bobinage $LP_1$ prend une valeur non nulle constante ainsi que représentée sur la figure 9.

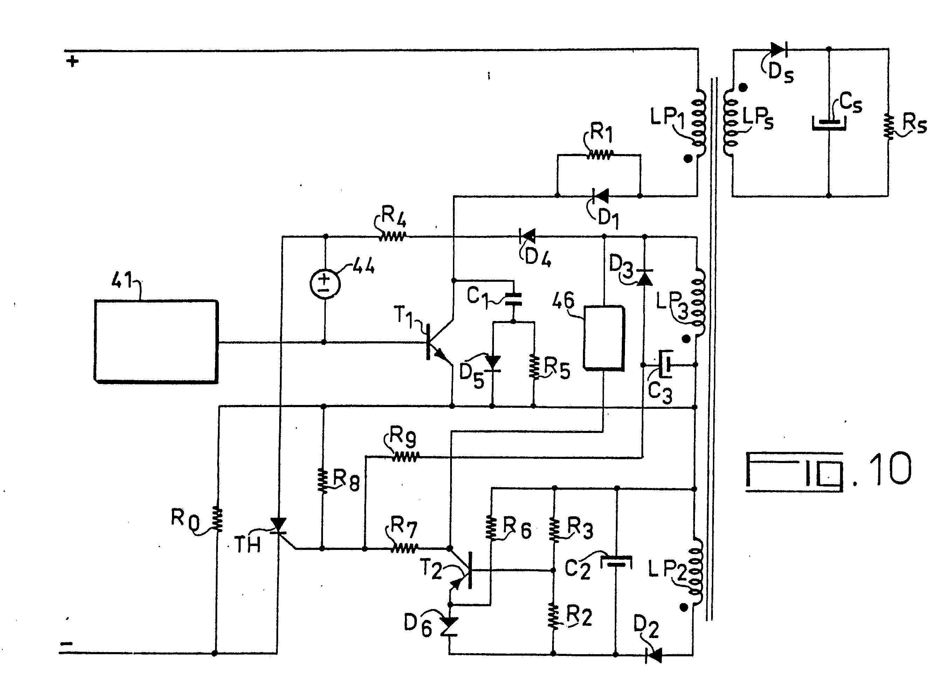

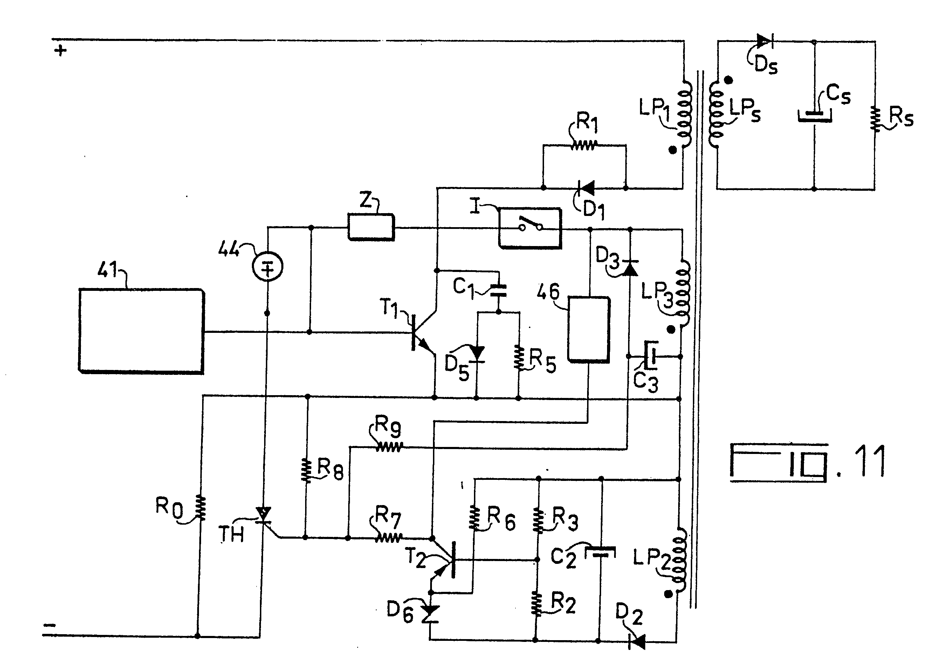

On a représenté sur les figures 10 et 11, deux exemples concrets de réalisation d'alimentation à découpage selon l'invention. Le schéma de la figure 10 dérive de celui d'une alimentation décrite dans la publication FR-A-2 345 762 précitée.

Le schéma de la figure 11 dérive du schéma d'une alimentation à découpage décrite dans la demande de brevet français n° 79.01642 déposée par la demanderesse le 23 janvier 1979 sous le titre : « Alimentation à découpage régulée » et publiée sous le n° FR-A-2 447 639.

Dans ces deux schémas, un bobinage primaire $LP_1$ mis en série avec un transistor de découpage NPN $T_1$ et une résistance de mesure $R_0$ est alimenté par une source de tension continue prise entre ses sorties + et −. Entre le collecteur du transistor $T_1$ et le bobinage $LP_1$ on trouve en série une cellule de protection composée d'une diode $D_1$ en parallèle avec une résistance $R_1$.

Le circuit d'utilisation est séparé du bobinage primaire $LP_1$ et comporte un bobinage secondaire $LP_s$ alimentant une diode $D_s$ qui permet de charger un condensateur $C_s$ sur lequel se trouve la charge $R_s$ en parallèle.

Un deuxième circuit de protection comprenant un condensateur $C_1$ en série avec une cellule parallèle composée d'une diode $D_5$ et d'une résistance $R_5$ est connecté entre le collecteur et l'émetteur du transistor $T_1$.

Un oscillateur 41 connecté à la base du transistor $T_1$ permet d'initialiser la mise en conduction de celui-ci.

Un troisième bobinage $LP_3$, couplé au bobinage $LP_1$ permet de délivrer une tension de réaction qui est appliquée à la base du transistor $T_1$ et qui continue la mise en conduction initialisée par l'oscillateur 41.

Un thyristor TH connecté entre la base du transistor $T_1$ et le pôle négatif de la source de tension continue permet de court-circuiter cette base de manière à bloquer le transistor $T_1$ à l'instant désiré pour obtenir la régulation de la tension de sortie.

Dans le schéma de la figure 10, le bobinage $LP_3$ est relié à la base du transistor $T_1$ par une diode $D_4$ en série avec une résistance $R_4$ et un générateur de tension continue 44 dont le pôle négatif est relié à cette base.

L'anode du thyristor TH est reliée à la base du transistor $T_1$ par l'intermédiaire de ce même générateur de tension 44.

Dans le schéma de la figure 10 par contre, le bobinage $LP_3$ est relié à la base du transistor $T_1$ par l'intermédiaire d'un interrupteur I en série avec un dipôle Z. L'anode du thyristor TH est reliée à la base du transistor $T_1$ par l'intermédiaire d'un générateur de tension continue 44 dont le pôle négatif est relié à cette base.

Le système de régulation de tension est commun aux deux schémas. Il comprend un transistor PNP $T_2$ jouant le rôle d'amplificateur différentiel. Le collecteur de ce transistor $T_2$ est alimenté en courant continu par l'intermédiaire d'une résistance $R_9$ et d'une résistance $R_7$ mises en série à partir d'un condensateur $C_3$ chargé par une diode $D_3$ alimentée par le bobinage $LP_3$.

Un quatrième enroulement $LP_2$ couplé à $LP_s$ permet de mesurer la tension de sortie $V_s$. Pour cela il charge un condensateur $C_2$ par une diode $D_2$. La tension aux bornes de $C_2$ est appliquée par l'intermédiaire d'un diviseur résistif formé par les résistances $R_3$ et $R_2$ sur la base du transistor $T_2$. La tension $V_0$ est obtenue par une diode Zener $D_6$ alimentée à partir de l'émetteur du transistor $T_1$ par une résistance $R_6$ et connectée de l'autre côté au point commun à la diode $D_2$ et au condensateur $C_2$. Cette diode $D_6$ délivre la tension $V_0$ qui est appliquée à l'émetteur du transistor $T_2$. Ainsi la tension sur le collecteur du transistor $T_2$ sera une fonction de la différence

entre la tension $V_0$ fournie par la diode Zener $D_6$ et une fraction de la tension $V_s$ fournie par le pont $R_2$-$R_3$.

La gâchette du thyristor TH est reliée d'une part au point milieu des résistances $R_7$-$R_9$ et d'autre part à une résistance $R_8$ elle-même connectée à l'émetteur du transistor $T_1$. Ainsi le thyristor TH reçoit par l'intermédiaire de $R_8$ entre sa gâchette et sa cathode la tension développée dans la résistance $R_0$ par le courant qui passe dans le primaire $LP_1$, et cette tension est comparée à la tension qui se développe au point commun entre les résistances $R_7$ et $R_9$ sous l'action du circuit de régulation. Le thyristor joue donc le rôle de comparateur entre la tension de mesure du courant maximum et la tension de référence. Lorsque la différence de tension entre la cathode et la gâchette du thyristor dépasse la tension de déclenchement de celui-ci, il se déclenche et court-circuite la base du transistor $T_1$ ce qui bloque ce dernier.

Ce thyristor joue donc à la fois le rôle du comparateur 43 et de l'interrupteur 45 des figures 4 et 7.

Comme on le remarque, l'enroulement $LP_3$ nécessaire pour mettre en œuvre l'invention existe déjà dans un tel schéma et c'est celui qui permet d'assurer la saturation du transistor après le déclenchement par l'oscillateur 41. Pour obtenir la tension de correction $V_3$ et l'ajouter à la tension de référence $V_r$, on connecte un circuit de mise en forme 46 à l'extrémité du bobinage $LP_3$ connecté à la cathode de la diode $D_3$. La tension $V_3$ obtenue par ce circuit 46 est ramenée sur le collecteur du transistor $T_2$ ce qui réalise le mélange de $V_3$ et de $V_r$.

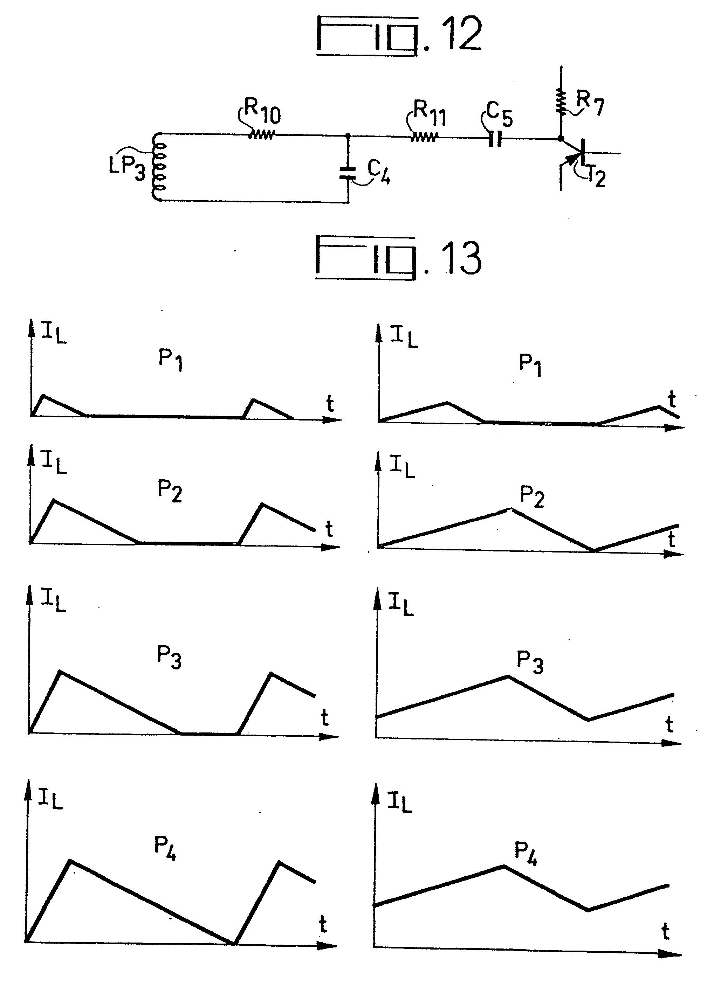

Un exemple de réalisation du circuit de mise en forme 46 est représenté sur la figure 12. La tension provenant de $LP_3$ est intégrée dans une cellule d'intégration composée de la résistance $R_{10}$ et du condensateur $C_4$. Comme la tension $V_{LP_3}$ est formée de signaux rectangulaires, cette intégration donne des signaux ayant sensiblement la forme de dents de scie comme représenté sur la figure 8. Cette tension est ensuite appliquée au collecteur du transistor $T_2$ par l'intermédiaire d'une résistance $R_{11}$ et d'un condensateur $C_5$. La résistance $R_{11}$ permet en liaison avec la résistance $R_7$, de régler les valeurs relatives de la tension $V_3$ et de la tension $V_r$. Le condensateur $C_5$ supprime la composante continue, ce qui permet de ne pas modifier le point de repos du transistor $T_2$.

Dans une réalisation concrète, on a pris pour valeur de $R_{10}$ — 680 ohms ; pour valeur de $C_4$ — 22 nanofarads ; pour valeur de $R_{11}$ — 470 ohms ; et pour valeur de $C_5$ — 0,1 microfarad.

Une telle alimentation permettra de fournir à une charge variable une tension continue constante en dépit de larges variations de la tension de la source continue dont on part et de la puissance consommée dans la charge. Le courant dans le bobinage primaire $LP_1$ a été représenté sur la figure 13 pendant un peu plus d'une période pour un certain nombre de valeurs typiques de la tension de départ et de la puissance consommée. Dans les diagrammes de gauche, la tension de la source continue dont on part, c'est-à-dire en fait le plus souvent la tension du secteur redressée, est forte. En prenant une série de puissances consommées $P_1$ à $P_4$ croissantes on constate que dans ces conditions, la durée de conduction croît et que le courant $I_0$ reste toujours nul. Dans la série de diagrammes de droite par contre, pour les mêmes valeurs $P_1$ à $P_4$ de la puissance consommée mais avec une tension de source faible on constate que la durée de conduction croît et que le courant $I_0$ est tout d'abord nul puis se met à prendre une valeur de plus en plus importante à partir de la puissance $P_2$.

## Revendications

1. Dispositif d'alimentation à découpage régulé contre les variations de tension d'entrée et de puissance de sortie, du type comprenant une source de tension continue alimentant en série un primaire ($LP_1$) de transformateur, un transistor hacheur (T) et une résistance de mesure ($R_0$), un circuit de commande (41) permettant d'appliquer sur la base du transistor hacheur (T) des impulsions récurrentes de déblocage, un premier secondaire ($LP_2$) de transformateur permettant de délivrer une première tension ($V_2$) destinée à mesurer la valeur de la tension de sortie ($V_s$) de l'alimentation, des moyens (Z) permettant de délivrer une deuxième tension ($V_0$) de valeur déterminée, des moyens (42) permettant de comparer la première ($V_2$) et la deuxième tension ($V_0$) et de délivrer en fonction de cette comparaison une tension de référence ($V_r$), des moyens (43) permettant de déterminer la différence entre cette tension de référence ($V_r$) et une tension de mesure ($R_0 I_M$) apparaissant aux bornes de la résistance de mesure pendant le déblocage du transistor (T) et de délivrer un signal de blocage pour une valeur déterminée de cette différence, et un interrupteur (45) permettant sous l'action de ce signal de blocage de court-circuiter la base du transistor hacheur (T) pour le rebloquer, caractérisé en ce qu'il comprend en outre des moyens ($LP_3$, 46, 47) permettant de mesurer la durée de conduction du transistor hacheur (T ou $T_1$) et de modifier la tension de référence ($V_r$) en fonction de cette mesure pour maintenir constante cette durée d'un cycle à l'autre pour chaque couple de valeurs déterminées de la tension d'entrée et de la puissance de sortie ; le dispositif pouvant ainsi passer du mode de fonctionnement à décharge complète du transformateur au mode de fonctionnement à décharge incomplète de celui-ci, en conservant une fréquence fixe de fonctionnement.

2. Dispositif selon la revendication 1, caractérisé en ce que l'interrupteur (45) est un thyristor (TH) permettant également de comparer par son circuit gâchette-cathode la tension de référence ($V_r$) et la tension de mesure ($R_0 I_M$).

3. Dispositif selon l'une quelconque des revendications 1 et 2, caractérisé en ce que les moyens de mesure de la durée de conduction du transistor hacheur (T ou $T_1$) comprennent un deuxième secondaire ($LP_3$) du transformateur permettant de délivrer une tension formée de créneaux rectangulaires dont la durée est égale à la durée de conduction du transistor hacheur (T ou $T_1$).

4. Dispositif selon la revendication 3, caractérisé en ce que le deuxième secondaire ($LP_3$) transformateur permet également de délivrer à la base du transistor hacheur (T ou $T_1$), après chaque impulsion de déblocage, une tension de réaction destinée à prolonger l'action de l'impulsion de déblocage.

5. Dispositif selon l'une quelconque des revendications 3 et 4, caractérisé en ce que les moyens (Fig. 12) de mesure de la durée de conduction du transistor hacheur (T ou $T_1$) comprennent en outre une cellule d'intégration ($R_{10}$, $C_4$) permettant d'intégrer les créneaux rectangulaires formant la tension délivrée par le deuxième secondaire ($LP_3$) ; la tension de crête de ces signaux intégrés mesurant la durée de conduction du transistor hacheur (T ou $T_1$).

6. Dispositif selon la revendication 5, caractérisé en ce que la cellule d'intégration ($R_{10}$, $C_4$) est suivie d'une résistance ($R_{11}$) permettant de régler la contribution du signal intégré à la tension de référence et d'un condensateur ($C_5$) permettant de supprimer la composante continue comprise dans le signal intégré.

## Claims

1. Switching supply unit regulated against input voltage and output power variations, of the type comprising a direct voltage source feeding in series a transformer primary ($LP_1$), a switching transistor (T) and a measurement resistor ($R_0$), a control circuit (41) allowing to supply recurring enabling pulses to the base of the switching transistor (T), a first transformer secondary ($LP_2$) allowing to supply a first voltage ($V_2$) for measurement of the value of the output voltage ($V_s$) of the supply unit, means (Z) allowing to supply a second voltage ($V_0$) of predetermined value, means (42) allowing to compare the first voltage ($V_2$) and the second voltage ($V_0$) and to deliver a reference voltage ($V_r$) as a function of this comparison, means (43) allowing to determine the difference between this reference voltage ($V_r$) and a measurement voltage ($R_0 I_M$) appearing at the terminals of the measurement resistor ($R_0$) when the transistor (T) is enabled, and to deliver a blocking signal for a determined value of this difference, and an interruptor (45) allowing to short-circuit the base of the switching transistor (T) under the action of this blocking signal to block the transistor again, characterized in that it further comprises means ($LP_3$, 46, 47) allowing to measure the conduction duration of the switching transistor (T or $T_1$) and to modify the reference voltage ($V_r$) as a function of this measurement for maintaining this duration constant from one cycle to another for each pair of determined values of input voltage and output power ; the device thus being adapted to pass from a complete transformer discharge mode to an incomplete transformer discharge mode maintaining a fixed operating frequency.

2. Device in accordance with claim 1, characterized in that the interruptor (45) is a thyristor (TH) further allowing to compare the reference voltage ($V_r$) and the measurement voltage ($R_0I_M$) by its gate-cathode circuit.

3. Device in accordance with claim 1 or 2, characterized in that the means for measurement of the conduction duration of the switching transistor (T or $T_1$) comprise a second transformer secondary ($LP_3$) allowing to deliver a voltage signal formed of rectangular pulses, the duration of which is equal to the conduction duration of the switching transistor (T or $T_1$).

4. Device in accordance with claim 3, characterized in that the second transformer secondary ($LP_3$) further allows to deliver a feed-back voltage to the base of the switching transistor (T or $T_1$) after each enabling pulse to prolong the action of the enabling pulse.

5. Device in accordance with any of claims 3 and 4, characterized in that the means (Fig. 12) for measurement of the conduction duration of the switching transistor (T or $T_1$) further comprise an integrating unit ($R_{10}$, $C_4$) allowing to integrate the rectangular pulses forming the voltage signal delivered by the second secondary ($LP_3$) ; the peak voltage of these integrated signals measuring the conduction duration of the switching transistor.

6. Device in accordance with claim 5, characterized in that the integrating unit ($R_{10}$, $C_4$) is followed by a resistor ($R_{11}$) allowing to regulate the contribution of the integrated signal to the reference voltage, and by a capacitor ($C_5$) allowing the rejection of the direct component of the integrated signal.

**Ansprüche**

1. Schaltnetzteil mit Ausregelung der Eingangsspannungs- und Ausgangsleistungsschwankungen, vom Typ mit einer Gleichspannungsquelle, die in Reihe miteinander eine Transformator-Primärwicklung ($LP_1$), einen Zerhackertransistor (T) und einen Meßwiderstand ($R_0$) speist, mit einer Steuerschaltung (41) zum Anlegen von wiederkehrenden Entsperrimpulsen an die Basis des Zerhackertransistors (T), einer ersten Transformator-Sekundärwicklung ($LP_2$) zum Abgeben einer ersten Spannung ($V_2$), die zur Messung des Ausgangsspannungswertes ($V_s$) des Netzteils bestimmt ist, Mitteln (Z) zur Abgabe einer zweiten Spannung ($V_0$) eines bestimmten Wertes, Mitteln (42) zum Vergleichen der ersten ($V_2$) mit der zweiten Spannung ($V_0$) und zur Abgabe einer Bezugsspannung ($V_r$), die von diesem Vergleich abhängt, Mitteln (43) zur Bestimmung der Differenz zwischen dieser Bezugspannung ($V_r$) und einer Meßspannung ($R_0I_M$), die an den Anschlüssen des Meßwiderstandes ($R_0$) während der Entsperrung des Transistors (T) auftritt, und zur Abgabe eines Sperrsignals für einen bestimmten Wert dieser Differenz, und mit einem Unterbrecher (45), der unter der Wirkung dieses Sperrsignals das Kurzschließen der Basis des Zerhackertransistors (T) zum erneuten Sperren desselben ermöglicht, dadurch gekennzeichnet, daß es ferner Mittel ($LP_3$, 46, 47) umfaßt, die es ermöglichen, die Dauer des leitenden Zustandes des Zerhackertransistors (T oder $T_1$) zu messen und die Bezugsspannung ($V_r$) in Abhängigkeit von diesem Meßwert zu verändern, um diese Dauer von einem Zyklus zum anderen für jedes Paar von bestimmten Werten der Eingangsspannung und der Ausgangsleistung konstant zu halten ; wobei die Vorrichtung auf diese Weise von einer Betriebsweise mit vollständiger Energieabgabe des Transformators in eine Betriebsweise mit unvollständiger Energieabgabe desselben unter Beibehaltung einer festen Arbeitsfrequenz übergehen kann.

2. Vorrichtung nach Anspruch 1, dadurch gekennzeichnet, daß der Unterbrechet (45) ein Thyristor (TH) ist, der ferner über seine Steuerelektroden-Katoden-Strecke das Vergleichen der Bezugsspannung ($V_r$) mit der Meßspannung ($R_0I_M$) ermöglicht.

3. Vorrichtung nach Anspruch 1 oder 2, dadurch gekennzeichnet, daß die Mittel zum Messen der Dauer des leitenden Zustandes des Zerhackertransistors (T oder $T_1$) eine zweite Sekundärwicklung ($LP_3$) des Transformators umfassen, die das Abgeben einer Spannung ermöglicht, die aus Rechteckimpulsen gebildet ist, deren Dauer gleich der Dauer des leitenden Zustandes des Zerhackertransistors (T oder $T_1$) ist.

4. Vorrichtung nach Anspruch 3, dadurch gekennzeichnet, daß die zweite Sekundärwicklung ($LP_3$) des Transformators ferner das Anlegen einer Rückkopplungsspannung zum Verlängern der Wirkung des Entsperrimpulses an die Basis des Zerhackertransistors (T oder $T_1$) nach jedem Entsperrimpuls ermöglicht.

5. Vorrichtung nach Anspruch 3 oder 4, dadurch gekennzeichnet, daß die Mittel (Fig. 12) zum Messen der Dauer des leitenden Zustandes des Zerhackertransistors (T oder $T_1$) ferner ein Integrationsglied ($R_{10}$, $C_4$) zum Integrieren der Rechteckimpulse umfassen, welche die von der zweiten Sekundärwicklung ($LP_3$) abgegebene Spannung bilden ; wobei der Spitzenspannungswert dieser integrierten Signale den Meßwert für die Dauer des leitenden Zustandes des Zerhackertransistors bildet.

6. Vorrichtung nach Anspruch 5, dadurch gekennzeichnet, daß auf das Integrationsglied ($R_{10}$, $C_4$) ein Widerstand ($R_{11}$) zum Regeln des Beitrags des integrierten Signals zu der Bezugsspannung und ein Kondensator ($C_5$) zum Unterdrücken der in dem integrierten Signals enthaltenen Gleichspannungskomponente folgen.

Fig. 1

Fig. 2

**0 021 867**

FIG.3

FIG.4

0 021 867

FIG.5

Fig. 6

Fig. 7

0 021 867

FIG. 8

FIG. 9

5

FIG. 10

0 021 867

FIG. 11

0 021 867

Fig. 12

Fig. 13